# EUROPÄISCHE PATENTANMELDUNG

(11) **EP 0 701 231 A1**
(43) Veröffentlichungstag der Anmeldung: **13.03.1996**
(21) Anmeldenummer: 94114101.2
(22) Anmeldetag: 09.09.1994
(51) Int. Cl.: G07F 7/08, G06K 19/10

(54) **Wert- und Ausweisdokumente, präpariert mit formerinnerungsfähigen Metallteilen**

(71) Anmelder: Singer, Andreas, A-4020 Linz (AT)
(72) Erfinder: Singer, Andreas, A-4020 Linz (AT)

(57) **Zusammenfassung**

Zur Erhöhung der Fälschungssicherheit werden die Wert- und Ausweisdokumente mit formerinnerungsfähigen Metallteilen präpariert. Die Metallteile bestehen entweder aus Drähten oder Plättchen und geben bei einer genau einstellbaren Transformationstemperatur eine erkennbare Reaktionskraft, die über den Tastsinn Auskunft über die Echtheit der Dokumente gibt.

## Beschreibung

Die Erfindung betrifft Wert- und Ausweisdokumente, die mit speziell legierten, formerinnerungsfähigen (shape memory) Metallteilen, die ihre kristalline Phasenumwandlungstemperatur bei einer bestimmten Temperatur (z.B. knapp unter Körperwärme) besitzen, laminiert sind. Diese Metallteile sind feine Drähte oder Blättchen, die verwebt oder als Zwischenschicht eingebracht werden. Die Metallteilchen versuchen, bei der eingestellten Phasenumwandlungstemperatur ihren ursprünglichen Formzustand einzunehmen. Wird nun z.B. ein Geldschein oder der laminierte Teil des Geldscheines erwärmt (z.B. zwischen den Fingern gehalten), so versteift sich das Material und wirkt einer Deformation entgegen. Diese fühlbaren Kräfte geben Auskunft über die Echtheit des Geldscheines und ermöglichen einen Banknotentest ohne zusätzliche technische Hilfsmittel.

Reprografische Techniken für die Banknotenproduktion müssen laufend verbessert werden, da heutzutage hochtechnologische Reproduktionssyteme nicht mehr nur einem kleinen Kreis von Spezialisten vorbehalten sind. Durch die Verfügbarkeit von relativ billigen Reproduktionsmitteln wie Farbkopierer, Scanner und Computer mit "image processing" und Farbdrucker, können Geldscheine nachgemacht werden, die sogar von professionellen Personen bei einer schlichten Sichtkontrolle nicht als Fälschung zu erkennen sind.

Traditionelle Methoden der Abschreckung zur Geldscheinfälschung waren die Auswahl einer speziellen Papierqualität, die durch Baumwoll- und Leinenfasern verstärkt und ohne fluoreszierende Bleichmittel behandelt wird, fein verteilt gefärbte Fasern, Wasserzeichen, feine Gravierungen mit hoher Auflösung, Erhebungen, sowie der Einsatz von Tiefdruckpressen (Intaglio).

Moderne Reproduktionsverfahren bedienen sich einer Vielzahl von technischen Neuerungen, wie fotolumineszierende Druckfarben, metallisch glänzendes Fasergewebe, Fasern oder Farben die Licht selektiv ausstrahlen oder absorbieren, Beimengung von Mikropartikeln mit definierten physikalischen Eigenschaften im Mikrowellen-, Infrarot- oder Ultraviolettbereich, Benutzung von optischen Beugungsphänomenen (Hologramme, Kinegramme), in Papierstruktur eingearbeiteter, metallisch überzogener Sicherheitsfaden, Zugabe von Pigmenten mit Mehrfachschichtung, die die verschiedenen Wellenlängen je nach Lichteinfallswinkel unterschiedlich reflektieren, eingearbeitete Metallfasern für Radaruntersuchungen, eingearbeitete Planketten mit magnetischen oder optischen Eigenschaften, Papier-Papier oder Papier-Plastik Laminate, Beugungsbalken, Spezialmuster, deren Abstandssequenz nahe der digitalen Auflösung von Computern, Scannern oder Druckern liegen und dadurch ungewollte Fresnelmuster erzeugen, und Grauskalierung von Bildern durch Punkte, deren Abstand unter der Auflösungsmöglichkeit der digitalen Einrichtungen liegt.

All diese Techniken haben den Nachteil, daß sie teilweise kopiert oder simuliert werden können (z.B. Waschen von Papier, um Fluoreszenz zu vermeiden; Aufkleben von Metallstreifen; Zeichnen mit transparenter Tinte, um Wasserzeichen zu simulieren; Kopieren von Farbfasern). Manche Sicherheitsvorkehrungen begrenzen die Lebensdauer der Geldscheine (Hologramme) oder verlangen technische Hilfsmittel (UV-Lampe, Vergrößerungsglas). Andererseits ist die Kopiersicherheit von Spezialmustern oder Grauskalierungen durch die laufende Auflösungverbesserung von digitalen Geräten bald nicht mehr gegeben.

Der Erfindung liegt die Aufgabe zugrunde, eine beständige, schwierig zu kopierende und für jedermann überprüfbare Geldscheinnote zu kreieren. Die Banknoten müssen ohne erhebliche Mehrkosten herstellbar sein.

Diese Aufgabe wird bei einem gattungsgemäßen Aufbau des Geldscheines nach Patentanspruch erfüllt.

Erinnerungsfähige Metalle kontraktieren, wenn sie über die Transformationstemperatur erwärmt werden. Typische Metalle sind die Nickel-Titan Legierungen, die bei niedriger Temperatur die martensitische Kristallstruktur, und bei Temperaturen über dem Transformationspunkt die austenitische Struktur aufweisen. Diese Kontraktion kann ausgenutzt werden, um Kräfte zu erzeugen. Um die Legierung im kalten Zustand zu deformiert ist nur eine geringe Kraft aufzuwenden. Erwärmt sich die Legierung über die Transformationstemperatur, so kann eine deutliche Zunahme der Reaktionskraft beobachtet werden. Dieser Prozess ist reversibel und kann beliebig oft wiederholt werden. Die Lebensdauer der Metallteilchen ist praktisch unbegrenzt und ist im Prinzip nur durch eine mechanische Abnutzung beeinträchtigt. Eine naheliegende wirtschaftliche Anwendungsmöglichkeit ist die Modifizierung des Sicherheitsfadens durch diese Metalllegierungen. Andererseits kann der Sicherheitsfaden durch solche Legierungen auch komplett ersetzt werden. Möglich ist auch die Einbringung von Plättchen beziehungsweise eines Drahtgewebes in das Substrat.

Der oben genannte Erinnerungseffekt wurde schon in vielen technischen Anwendungen qualifiziert. Beispiele sind Mikroventile mit erinnerungsfähigen Membranen, die durch elektrischen Strom erwärmt werden und dadurch öffnen, Drähte, die um zwei Spulen gewickelt sind und durch lokale Erwärmung eine Drehbewegung hervorrufen, und sogar Büstenhalter, die mit Drähten laminiert sind und durch die Körpertemperatur gestrafft werden.

Die mit der Erfindung erzielten Vorteile bestehen insbesondere darin, daß durch Einführung einer einfach zu verwirklichenden Sicherung Falschgeld durch den Tastsinn als solches erkannt wird und dadurch optische und digitale Kopiermöglichkeiten ausgeschlossen sind.

## Patentansprüche

1. Wert- und Ausweisdokumente präpariert mit Metalldrähten, Streifen oder Blättchen aus einer formerinnerungsfähigen Legierung, dadurch gekennzeichnet, daß durch den hybriden Aufbau des Dokumentes eine Echtheitserkennung durch das Auftreten von Formerinnerungskräften durchgeführt werden kann, wenn eine Deformation bei gleichzeitiger Temperaturerhöhung oder wenn eine Temperaturerhöhung bei bereits vorhandener Verformung initiert wird.

2. Wert- und Ausweisdokumente nach Anspruch 1, dadurch gekennzeichnet, daß die martensitische Transformationstemperatur knapp unter menschlicher Körpertemperatur eingestellt wird.
